# EUROPÄISCHE PATENTSCHRIFT

(11) **EP 4 337 848 B1**
(45) Veröffentlichungstag und Bekanntmachung des Hinweises auf die Patenterteilung: **27.11.2024**
(21) Anmeldenummer: 22728391.8
(22) Anmeldetag: 06.05.2022
(51) Int. Cl.: F02B 67/06, F16H 7/02, F16H 55/36

(54) **NEBENAGGREGATETRIEB FÜR EIN FAHRZEUG**
ANCILLARY UNIT DRIVE FOR A VEHICLE
ENTRAÎNEMENT D'UNITÉS AUXILIAIRES POUR UN VÉHICULE

(30) Priorität: 10.05.2021 DE 102021112162
(43) Veröffentlichungstag der Anmeldung: 20.03.2024
(73) Patentinhaber: MAN Truck & Bus SE, 80995 München (DE)
(72) Erfinder: PHAM, Haison, 80995 München (DE)
(74) Vertreter: v. Bezold & Partner Patentanwälte - PartG mbB
(86) Internationale Anmeldenummer: PCT/EP2022/062332
(87) Internationale Veröffentlichungsnummer: WO 2022/238261

(56) Entgegenhaltungen:
- DE-A1- 102005 023 878
- DE-A1- 102017 203 295
- US-A1- 2009 266 097
- US-B2- 7 798 928

## Beschreibung

Die Erfindung betrifft einen Nebenaggregatetrieb für einen Antriebsmotor sowie ein Kraftfahrzeug mit einem solchen Nebenaggregatetrieb.

Aus der Praxis ist bekannt, Nebenaggregate über einen Nebenaggregatetrieb anzutreiben. Beispielsweise werden hierfür Nebenaggregate oder allgemein Leistungsabhnehmer, wie zum Beispiel Pumpen oder Generatoren zur Erzeugung von Strom, über einen Riemen angetrieben. Der Riemen wird hierfür von einem Antriebsrad oder auch treibendem Riemenrad angetrieben, das bei Fahrzeugen mit Verbrennungsmotor an ein Ende einer Kurbelwelle des Verbrennungsmotors drehfest angebracht ist oder mittelbar von einer Kurbelwelle angetrieben werden kann. Dokument DE 10 2017 203295 A1 beschreibt einen entsprechenden Nebenaggregatetrieb.

Der Riemen sowie dessen physischen Eigenschaften, wie zum Beispiel die Riemenbreite, werden so ausgelegt, dass alle Nebenaggregate mit einer ausreichenden Leistung versorgt werden können. Hierfür wird sich an dem Nebenaggregat oder auch Leistungsabnehmer orientiert, das die größte Last aufnimmt. Für alle anderen Nebenaggregate ist diese Auslegung des Riemens allerdings im besten Fall gerade passend oder deutlich überdimensioniert, wenn diese deutlich geringere Lasten aufnehmen müssen.

Es ist somit eine Aufgabe der Erfindung, einen verbesserten Nebenaggregatetrieb bereitzustellen, mit dem Nachteile herkömmlicher Nebenaggregatetriebe vermieden werden können.

Diese Aufgabe wird durch einen Nebenaggregatetrieb mit den Merkmalen des unabhängigen Anspruchs 1 gelöst. Vorteilhafte Weiterbildungen sind in den abhängigen Ansprüchen und der Beschreibung angegeben.

Gemäß einem ersten allgemeinen Gesichtspunkt der Erfindung wird ein Nebenaggregatetrieb für einen Antriebsmotor und/oder ein Fahrzeug bereitgestellt. Der Nebenaggregatetrieb ist eine Vorrichtung zum Antrieb von Nebenaggregaten eines Kraftfahrzeugs. In einer Ausführungsform kann es sich bei dem Nebenaggregatetrieb um den Nebenaggregatetrieb einer Brennkraftmaschine für ein Kraftfahrzeug handeln. Erfindungsgemäß umfasst der Nebenaggregatetrieb mehrere Nebenaggregate, die auch als Leistungsabnehmer bezeichnet werden können.

Der Nebenaggregatetrieb umfasst ferner einen ersten Riemen, der in einer ersten Riemenebene angeordnet ist und in Antriebsverbindung mit den mehreren Nebenaggregaten steht.

Der Nebenaggregatetrieb umfasst ferner einen zweiten Riemen, der in einer zweiten Riemenebene angeordnet ist, die parallel versetzt zur ersten Riemenebene ist, und in Antriebsverbindung mit lediglich einem Teil der mehreren Nebenaggregate steht, vorzugsweise zur Erhöhung des an den Teil der mehreren Nebenaggregate übertragenen Drehmoments. Der Nebenaggregatetrieb umfasst ferner eine treibende Welle, die über zwei zueinander drehfest angeordnete treibende Riemenspuren in Antriebsverbindung mit dem ersten und dem zweiten Riemen steht.

Um somit die übertragbare Leistung innerhalb eines Riementriebes mit mehreren Leistungsabnehmern (Nebenaggregate) nur partiell für einen bestimmten Leistungsabnehmer oder einen Teil der Leistungsabnehmer zu erhöhen, wird ein zusätzlicher (zweiter) Riemen zwischen Leistungsantrieb und diesen einen Abnehmer oder diesen Teil der Leistungsabnehmer gespannt, sodass dieser eine Leistungsabnehmer oder dieser Teil der Leistungsabnehmer sowohl von dem ersten Riemen als auch von dem zweiten Riemen angetrieben wird.

Dies bietet den Vorteil, dass eine Antriebsleistung des Teils der mehreren Nebenaggregate erhöht werden kann, ohne dass für alle Nebenaggregate die potentiell übertragbare Leistung erhöht werden muss, obwohl diese nicht mehr Last aufnehmen als ursprünglich angedacht. Somit kann für einen Teil der Nebenaggregate gezielt mehr Leistung umgesetzt werden, insbesondere das übertragene Drehmoment erhöht werden, während die Lager- und Riemenbelastungen für die anderen Nebenaggregate (Leistungsabnehmer) innerhalb des Gesamtriementriebes unverändert bleiben.

Dieser Ansatz ist besonders vorteilhaft, wenn bei einem bestehenden Riementrieb ein zusätzliches Nebenaggregat integriert werden muss, welches im Vergleich zu den bisherigen einen höheren Leistungsbedarf hat, d. h. an das ein höheres Drehmoment übertragen werden muss. Entsprechendes gilt, wenn bei einem bestehenden Riementrieb ein bisheriges Nebenaggregat oder ein Teil der Nebenaggregate durch Nebenaggregate mit höheren Leistungsanforderungen ersetzt werden müssen.

Ein weiterer Vorteil ist, dass durch den Einsatz zweier Riemen die Lebensdauer des ersten Riemens, welcher auch als Grundriementrieb bezeichnet werden kann, erhöht wird. Der zweite Riemen nimmt auf vorteilhafte Weise Vibrationen auf, die somit einer Lebensdauerverlängerung des ersten Riemens zuträglich sind.

Unter einer Riemenebene wird derjenige Raumbereich verstanden, in der der jeweilige Riemen verläuft bzw. in der sich der jeweilige Riemen bewegt. Die Riemenebene kann auch als Triebebene bezeichnet werden. Da die zweite Riemenebene parallel versetzt zur ersten Riemenebene ist, folgt hieraus, dass der erste Riemen den zweiten Riemen nicht in einem Teilbereich umschlingen kann oder dass der zweite Riemen den ersten Riemen nicht in einem Teilbereich umschlingen kann. Stattdessen ist der zweite Riemen in einer Richtung, die senkrecht zu den parallelen Riemenebenen ist, versetzt zum ersten Riemen angeordnet.

In einer Ausführungsform kann lediglich eines der mehreren Nebenaggregate in Antriebsverbindung mit dem zweiten Riemen stehen. Mit anderen Worten wird nur für einen bestimmten Leistungsabnehmer (für ein Nebenaggregat) die übertragbare Leistung innerhalb des Riementriebes mit mehreren Leistungsabnehmern partiell erhöht, indem der zusätzliche Riemen (zweite Riemen) zwischen Leistungsantrieb und diesen einen Leistungsabnehmer gespannt ist, sodass dieser eine Leistungsabnehmer sowohl von dem ersten Riemen als auch von dem zweiten Riemen angetrieben wird. Dies bietet den Vorteil, dass im Falle einer starken Steigerung einer Abnahmeleistung nur eines der Nebenaggregate über einen zweiten Riemen einen Teil der benötigten Leistung, die über die vom ersten Riemen bereitgestellte Leistung hinausgeht, übertragen bekommt.

In einer weiteren Ausführungsvariante dieser Ausführungsform kann der zweite Riemen lediglich ein treibendes Riemenrad und ein getriebenes Riemenrad umschlingen. Entsprechend kann der zweite Riemen besonders kompakt ausgeführt sein. Ferner wird hierdurch eine Erweiterung eines bestehenden Nebenaggregatetriebs um einen zweiten Riemen besonders einfach ermöglicht, sodass alle anderen Riemenräder, Umlenkrollen, Spannrollen etc. unverändert bleiben können.

Unter einem "treibenden Riemenrad" soll insbesondere ein Riemenrad oder auch eine Riemenscheibe verstanden werden, durch das oder die das Drehmoment in den Nebenaggregatetrieb, vorzugsweise die Riemen, eingeleitet wird. Unter einem "getriebenen Riemenrad" soll insbesondere ein Riemenrad oder auch eine Riemenscheibe verstanden werden, das oder die mittels des Riemens von dem treibenden Riemenrad oder auch treibenden Riemenscheibe angetrieben wird. Unter "umschlingen" soll insbesondere ein direktes Anliegen auf einer Außenkontur, vorzugsweise einer Außenkontur eines Riemenrads oder Riemenscheibe, verstanden werden.

Das an den zweiten Riemen angekoppelte Nebenaggregat kann eine generatorisch betreibbare elektrische Maschine sein. Beispielsweise steigt die Anforderung an die Energieversorgung bei Fahrzeugen in letzten Jahren stetig, sodass ein Generator immer stärkere Abnahmeleistungen zu erfüllen hat, um die steigende Anzahl elektronischer Komponenten zu versorgen. Mit dem erfindungsgemäßen Ansatz kann somit ein Generator in einem herkömmlichen Nebenaggregatetrieb durch einen leistungsfähigeren Generator mit wenig Aufwand ersetzt und leistungsgerecht angetrieben werden.

In einer weiteren Ausführungsform kann der zweite Riemen als selbstspannender Riemen ausgeführt sein.

Unter einem selbstspannenden Riemen wird verstanden, dass für eine Riemenspannung, die für eine Übertragung von Drehmomenten notwendig ist, kein zusätzliches Element genutzt wird, dass den Riemen zusätzlich dehnt und/oder spannt, um eine angestrebte Riemenspannung zu erzeugen oder aufrechtzuhalten, sondern dass der selbstspannende Riemen aufgrund seiner Materialeigenschaften bereits bei Einbau so gespannt wird, dass dieser die bei Einbau erzeugte Spannung aufrecht hält. Selbstspannende Riemen sind auch unter den Begriffen "elasto-belt" oder auch "stretchy-belt" bekannt und im Handel erhältlich.

Der selbstspannende Riemen bietet den Vorteil, dass radiale Achsabstände zwischen der treibenden Welle und dem Teil der mehreren Nebenaggregate sehr kurz sein können, weil kein zusätzlicher Rollkörper, wie dieser bei nicht selbstspannenden Riemen als Spannmittel eingesetzt wird, an dem selbstspannenden Riemen anliegen muss.

Entsprechend kann der zweite Riemen keine Spannrolle teilweise umschlingen und/oder es kann kein Riemenspanner zum Spannen des zweiten Riemens vorgesehen sein. Dies bietet den Vorteil, dass eine Effizienz des Nebenaggregatetriebs durch weniger Rollkontakte und damit weniger Reibung gesteigert wird. Dies bietet ferner den Vorteil, dass zusätzlicher Bauraum gespart wird, das Gewicht reduziert und für den zweiten Riemen keine wartungsaufwändige Mechanik verbaut wird. Ein Riemenspanner erfüllt den Zweck des Spannens eines Riemens. Unter einer Spannrolle wird eine Rolle verstanden, die durch ein Spannmittel eine definierte Dehnung in einen Riemen induziert, sodass dieser immer mit der gleichen Spannung behaftet ist und somit gleiche Kräfte übertragen kann, obwohl sich ein Riemen mit der Zeit dehnt.

In einer weiteren Ausführungsform kann der Nebenaggregatetrieb ferner eine mit der treibenden Welle drehverbindbare und/oder drehverbundene treibende Riemenscheibe aufweisen, die als Doppelriemenscheibe ausgeführt ist, aufweisend eine erste treibende Riemenspur, auf der der erste Riemen angreift, und eine zweite treibende Riemenspur, auf der ein zweiter Riemen angreift. Unter einer Doppelriemenscheibe wird eine Riemenscheibe verstanden, auf der radial zwei Riemenspuren aufgebracht sind, auf denen jeweils ein Riemen angreifen kann.

Eine Doppelriemenscheibe ermöglicht eine baulich besonders kompakte Anordnung zweier Riemen, die in parallel versetzten Riemenebenen laufen. Die treibenden Riemenspuren können so ausgeführt sein, dass diese eine an einen jeweiligen genutzten Riemen für jede Spur angepasste Oberfläche aufweisen, die für eine optimale Kraftübertragung für den jeweiligen Riemen geeignet ist. Ferner können die Riemenspuren so ausgestaltet sein, dass diese ein axiales "wandern" der Riemen in einem Betrieb verhindert, sodass der erste und der zweite Riemen nicht überlappen oder auch an Randbereichen nicht aneinander reiben können.

In einer alternativen Ausführungsform kann der Nebenaggregatetrieb ferner eine mit der treibenden Welle drehverbindbare treibende erste Riemenscheibe aufweisen, die in der ersten Riemenebene angeordnet ist, aufweisend eine erste treibende Riemenspur, auf der der erste Riemen angreift. Zusätzlich kann der Nebenaggregatetrieb eine mit der treibenden Welle drehverbindbare treibende zweite Riemenscheibe aufweisen, die in der zweiten Riemenebene und koaxial und drehfest zur treibenden ersten Riemenscheibe angeordnet ist, aufweisend eine zweite treibende Riemenspur, auf der der zweite Riemen angreift. Anstatt einer Doppelriemenscheibe werden somit zwei axial beabstandete herkömmliche Riemenscheiben verwendet.

Dies bietet den Vorteil, dass einzelne Riemenscheiben weniger aufwändig zu produzieren sind. Zusätzlich bietet dies die Möglichkeit, falls gewünscht und notwendig, noch weitere Riemenscheiben einfach nachrüsten zu können, falls mehr als zwei Riemen benötigt werden.

In einer weiteren Ausführungsform kann ein Durchmesser der zwei zueinander drehfest angeordneten treibenden Riemenspuren gleich sein. Der Durchmesser wird hierbei so angegeben, dass die Riemen der beiden Riemenspuren faktisch eine gleiche Laufgeschwindigkeit aufweisen. Dies ist insofern vorteilhaft, weil beispielweise Keilriemen andere radiale Abmaße aufweisen können als Flachriemen. Hierdurch ergeben sich auch unterschiedliche Kraftangriffspunkte zwischen Riemenscheibe und Riemen. Beispielsweise erfolgt eine Kraftübertragung bei Keilriemen nicht direkt am Riemenspurgrund. Der Riemenspurgrund ist die Fläche einer Riemenspur, die radial am nächsten zu einem Rotationsmittelpunkt gebildet wird und meist flach ausgebildet ist. Vielmehr erfolgt die Kraftübertragung bei einem Keilriemen an den Riemenflanken, die etwas abgehoben von dem Riemenspurgrund verlaufen. Ein Flachriemen würde allerdings auf dem Riemenspurgrund aufliegen und daher eine langsamere Laufgeschwindigkeit erfahren als ein Keilriemen wenn für einen Durchmesser der Riemenspurgrund ausschlaggebend wäre.

Ferner ist ein gleicher Durchmesser und damit eine gleiche Laufgeschwindigkeit der zwei Riemen vorteilhaft, um fortwährenden Schlupf zwischen treibender Riemenscheibe und angetriebener Riemenscheibe, an der zwei Riemen angreifen, zu verhindern.

In einer weiteren Ausführungsform kann der Teil der mehreren Nebenaggregate, der in Antriebsverbindung mit dem zweiten Riemen steht, jeweils über zwei zueinander drehfest angeordnete getriebene Riemenspuren in Antriebsverbindung mit dem ersten und dem zweiten Riemen stehen. Hier sind wiederum zwei Ausführungsvarianten denkbar. In einer ersten Ausführungsvariante können die zwei zueinander drehfest angeordneten getriebenen Riemenspuren durch eine getriebene Doppelriemenscheibe bereitgestellt sein und in einer zweiten Ausführungsvariante durch zwei koaxial angeordnete getriebene Riemenscheiben bereitgestellt sein.

In einer weiteren Ausführungsform kann ein Durchmesser der zwei zueinander drehfest angeordneten getriebenen Riemenspuren gleich sein. Dies bietet den Vorteil, dass keine Drehgeschwindigkeitsunterschiede oder ein Schlupf zwischen zwei angreifenden Riemen stattfindet und damit keine Leistung aufgrund von Reibung und damit Abwärme verloren geht. Ferner kann ein Nebenaggregat, das in Antriebsverbindung sowohl mit dem ersten als auch mit dem zweiten Riemen steht, von dem ersten Riemen und dem zweiten Riemen mit der gleichen Drehzahl angetrieben werden.

In einer weiteren Ausführungsform kann der zweite Riemen als Keilrippenriemen ausgeführt sein. Vorteilhaft an einem Keilrippenriemen ist, dass dieser eine Weiterentwicklung des Keilriemens darstellt und die Vorteile des Flachriemens (geringe Radien) mit denen des Keilriemens (geringere Umschlingungswinkel notwendig für eine gleichbleibende übertragbare Leistung bzw. größere Reibung bei einem gleichbleibendem Umschlingungswinkel) vereint. Der Keilrippenriemen besitzt Rippen, die in Längsrichtung verlaufen. Der Umschlingungswinkel gibt den Kontaktbereich in Winkelgraden an, in denen ein biegsames Bauteil ein anderes umschließt.

Die Erfindung umfasst ferner folgende Aspekte:
Der Nebenaggregatetrieb kann durch die Brennkraftmaschine mit einer notwendigen Leistung zum Antreiben von Nebenaggregaten versorgt werden. In einer bevorzugten Ausführungsform ist die Brennkraftmaschine eine Hubkolbenbrennkraftmaschine. Das Fahrzeug kann ein Nutzfahrzeug, zum Beispiel ein Lastkraftwagen, sein. Die Brennkraftmaschine kann nachfolgend auch als Motor bezeichnet werden. Die durch den Nebenaggregatetrieb angetriebenen Nebenaggregate können eine generatorisch betreibbare elektrische Maschine, z. B. eine Lichtmaschine, eine Schmierstoffpumpe, eine Hydraulikpumpe (zum Beispiel für eine Servolenkung), eine Kühlwasserpumpe, eine Kraftstoffpumpe, eine Einspritzpumpe, eine Dosierpumpe, ein Ventilator für den Kühler, ein Kompressor für eine Klimaanlage, eine Druckluftbremse oder zur Aufladung des Motors, einen Turbolader, oder einen Bremskraftverstärker umfassen.

Unter einem "Riemen" soll insbesondere ein endloses Umschlingungsmittel aus einem elastischen Material, wie beispielsweise Stoff, Leder, Kunststoff, Mischungen von Kunststoff und Carbon bzw. Carbonfasern, Kunststoff mit eingelassenen Metallverstärkungen oder allen gängigen Konstruktionsformen von Riemen, verstanden werden, das zur Übertragung von Drehbewegungen vorgesehen ist. Der Riemen ist vorzugsweise gelenklos ausgebildet. Der Riemen weist vorzugsweise Oberflächeneigenschaften auf, die für eine hohe Übertragbarkeit von Drehmomenten geeignet sind, bevor der Riemen an einer Oberfläche abrutscht, weil eine übertragbare (Reib-)Leistung überschritten wurde. Der erste Riemen kann als Keilrippenriemen, Flachriemen, Doppelkeilriemen, Verbundkeilriemen und allen weiteren bekannten und gängigen Riementypen ausgeführt sein. Der zweite Riemen kann alle Riementypen umfassen, die der erste Riemen umfassen kann, wobei der erste Riemen und der zweite Riemen vom gleichen oder unterschiedlichen Riementyp sein können.

Die treibende Welle kann ihrerseits von einer Kurbelwelle direkt oder indirekt angetrieben werden oder auch ein Fortsatz einer Kurbelwelle sein. Die treibende Welle kann als Wellenzapfen ausgeführt sein und/oder eine Wellennabe aufweisen.

Die Erfindung betrifft ferner ein Kraftfahrzeug, umfassend einen Nebenaggregatetrieb gemäß den Offenbarungen in diesem Dokument. Besonders vorzugsweise handelt es sich bei dem Kraftfahrzeug um ein Nutzfahrzeug. In diesem Fall kann es sich bei dem Kraftfahrzeug mit anderen Worten um ein Kraftfahrzeug handeln, das durch seine Bauart und Einrichtung zur Beförderung von Personen, zum Transport von Gütern oder zum Ziehen von Anhängerfahrzeugen ausgelegt ist. Beispielsweise kann es sich bei dem Kraftfahrzeug um einen Lastkraftwagen, einen Omnibus und oder einen Sattelzug handeln, der zumindest teilweise elektrisch angetrieben ist.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Figuren beschrieben. Es zeigen:
- Figur 1: einen Nebenaggregatetrieb in perspektivischer Ansicht;
- Figur 2: einen Nebenaggregatetrieb in Draufsicht;
- Figur 3: einen Nebenaggregatetrieb in Seitenansicht.

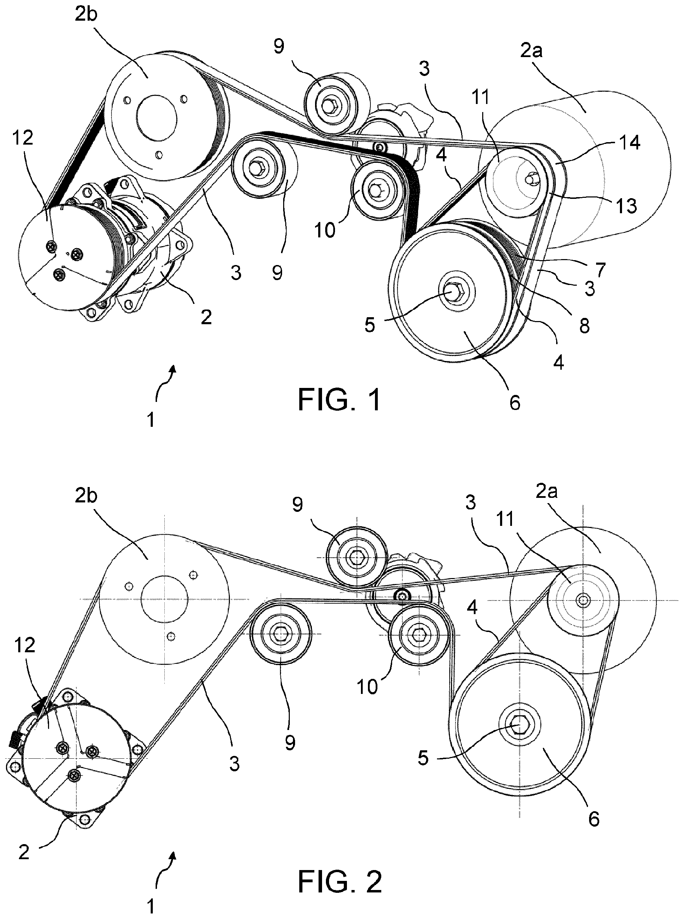

Figur 1 zeigt einen Nebenaggregatetrieb 1 in perspektivischer Ansicht, wie dieser beispielhaft ausgeführt sein kann. Der dargestellte Nebenaggregatetrieb 1 wird von einer Brennkraftmaschine (nicht dargestellt) angetrieben und umfasst beispielhaft drei Nebenaggregate 2, 2a, 2b, einen ersten Riemen 3 und einen zweiten Riemen 4. Die Riemen 3, 4 werden von einem treibenden Riemenrad 6 angetrieben.

Ferner steht in diesem Ausführungsbeispiel der zweite Riemen 4 lediglich mit einem Nebenaggregat 2a der drei Nebenaggregate 2 in Antriebsverbindung. Dies erhöht das übertragbare Drehmoment, dass an dieses eine Nebenaggregat 2a übertragen werden kann, zusätzlich um die Leistung, die nur von dem zweiten Riemen zur Verfügung gestellt wird. In anderen Worten wird die Leistung, die das Nebenaggregat 2a abnehmen kann, damit erhöht.

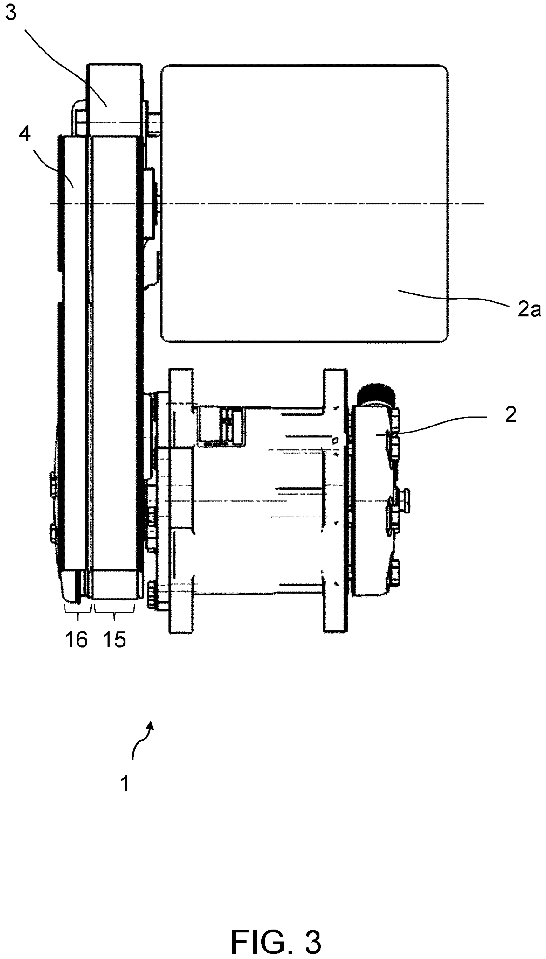

Der erste Riemen 3 ist in einer ersten Riemenebene 15 angeordnet und steht in Antriebsverbindung mit den mehreren Nebenaggregaten 2, 2a, 2b. Der zweite Riemen 4 ist in einer zweiten Riemenebene 16 angeordnet, die parallel versetzt zur ersten Riemenebene 15 ist. Dies ist noch deutlicher in Figur 3 zu sehen.

Ferner umfasst der Nebenaggregatetrieb 1 eine treibende Welle 5, die über zwei zueinander drehfest angeordnete treibende Riemenspuren 7, 8 in Antriebsverbindung mit dem ersten und dem zweiten Riemen 3, 4 steht.

Die Nebenaggregate 2, 2b, welche nur vom ersten Riemen 3, nicht jedoch vom zweiten Riemen 4 angetrieben werden, werden über die beiden Umlenkrollen 9 sowie dem Riemenspanner 10 mit einer Riemenspur, an welchen der erste Riemen 3 angreift, mit Leistung versorgt.

Die treibenden Riemenspuren 7, 8 sind auf einem Umfang des treibenden Riemenrads 6 angeordnet. In diesem Ausführungsbeispiel ist das treibende Riemenrad 6 als Doppelriemenscheibe ausgeführt. Das treibende Riemenrad 6, auch als treibende Riemenscheibe 6 bezeichnet, besteht in diesem Beispiel also aus einem Bauteil und nicht aus zwei zusammengesetzten Bauteilen, die drehfest und koaxial miteinander verbunden sind.

Der zweite Riemen 4 umschlingt, wie dargestellt, lediglich das treibende Riemenrad 6 und das getriebene Riemenrad 11, welches an dem Nebenaggregat 2a drehbar angebracht ist.

Der erste Riemen 3 umschlingt die getriebenen Riemenräder 12 des Nebenaggregats 2, das getriebene Riemenrad 2b sowie das getriebene Riemenrad 11 des Nebenaggregats 2a. Zusätzlich umschlingt der erste Riemen 3 zwei Umlenkrollen 9 und eine Spannrolle 10. Die Umlenkrollen 9 vergrößern die Umschlingungswinkel, die der Riemen 3 zu der treibenden Riemenscheibe 6 und einer getriebenen Riemenscheibe 12 aufweist. Die Spannrolle 10 vergrößert sowohl einen Umschlingungswinkel einer getriebenen Riemenscheibe 12. Ferner wird eine Riemenspannung des ersten Riemens 3 über eine geeignete Spannvorrichtung der Spannrolle 10 konstant gehalten. Je größer ein Umschlingungswinkel ist, desto größer sind übertragbare Leistungen.

Der zweite Riemen 4 ist als selbstspannender Riemen ausgeführt. Dies ermöglicht einen sehr geringen radialen Achsabstand der treibenden Welle 5 und des getriebenen Riemenrads 11 zueinander, weil keine Spannrolle 10 oder allgemein ein Riemenspanner 10, wie bei erstem Riemen 3, benötigt wird und dies eine Bauraumersparnis ermöglicht.

Wie bereits beschrieben ist die treibende Riemenscheibe 6 in diesem Ausführungsbeispiel als eine Doppelriemenscheibe ausgeführt. Die Doppelriemenscheibe umfasst eine erste treibende Riemenspur 7, auf der der erste Riemen 3 angreift und geführt wird, und eine zweite Riemenspur 8, auf der der zweite Riemen 4 angreift und geführt wird. Die Riemenspuren 7, 8 sind voneinander axial beabstandet, sodass auch die Riemen 3, 4 axial in parallelverlaufenden Riemenebenen 15, 16 verlaufen. Alternativ könnte die Doppelriemenscheibe als zwei einzelne Riemenscheiben ausgeführt sein, die jeweils eine Riemenspur aufweisen und drehfest auf der treibenden Welle 5 koaxial angebracht sein könnten (hier nicht dargestellt).

Der Durchmesser der zwei treibenden Riemenspuren, an dem die Krafteinleitung auf die Riemen 3, 4 erfolgt, ist gleich groß, sodass daraus auch eine gleiche Laufgeschwindigkeit der Riemen 3, 4 resultiert.

Die zwei Riemen 3, 4 treiben das Nebenaggregat 2a über das getriebene Riemenrad 11 mit zwei getriebenen Riemenspuren 13, 14 an. Das getriebene Riemenrad 11 ist in diesem Ausführungsbeispiel als Doppelriemenscheibe ausgeführt. Auch hier ist eine Ausführung mit zwei koaxial angeordneten getriebenen Riemenscheiben möglich (nicht dargestellt).

Der Durchmesser der zwei getriebenen Riemenspuren 13, 14 ist, wie auch bei den treibenden Riemenspuren 7, 8, der gleiche, bezogen auf eine Krafteinleitung von Riemen auf eine Riemenscheibe, sodass eine nahezu schlupffreie Leistungsübertragung über die zwei Riemen 3, 4 von der treibenden Riemenscheibe 6 zu der getriebenen Riemenscheibe 11 ermöglicht wird.

In anderen Worten wird mit dieser konstruktiven Ausführung die getriebene Riemenscheibe 11 mit der gleichen Drehzahl von erstem und zweiten Riemen 3, 4 angetrieben.

In diesem Ausführungsbeispiel sind die zwei Riemen 3, 4 als Keilrippenriemen ausgeführt.

Figur 2 zeigt den Nebenaggregatetrieb 1 aus Figur 1 in Draufsicht. Die treibende Welle 5, wie auch in Figur 1, ist nur teilweise sichtbar: hier ist nur ein Ende der treibenden Welle dargestellt, welche im Mittelpunkt der treibenden Riemenscheibe 6 befestigt ist. Der nicht dargestellte Fortsatz der treibenden Welle 5 kann eine Kurbelwelle sein oder ein Getriebe, welches die treibende Welle mit einer Kurbelwelle leistungsübertragend verbindet.

Figur 3 zeigt den Nebenaggregatetrieb 1 in Seitenansicht. Der erste Riemen 3 und der zweite Riemen 4 sind gut erkennbar nebeneinander angeordnet und die Riemenebenen 15 und 16 für die zwei Riemen 3, 4 dargestellt. Die Riemen 3, 4 überlappen sich an keiner Stelle.

Zusammengefasst ermöglicht der zweite Riemen 4 die übertragbare Leistung bzw. das übertragbare Drehmoment innerhalb eines Riementriebes mit mehreren Leistungsabnehmern nur partiell für einen bestimmten Leistungsabnehmer, hier dem Nebenaggregat 2a, zu erhöhen, da dieser eine Leistungsabnehmer 2a sowohl von dem ersten Riemen 3 als auch von dem Zusatzriementrieb 4 angetrieben wird. Hierdurch wird sichergestellt, dass der Riementrieb in Bezug auf alle übrigen Nebenaggregate, hier nur das Nebenaggregat 2, nicht überdimensioniert und ineffizient ist. Somit bleiben die Lager- und Riemenbelastungen für alle Leistungsabnehmer innerhalb des Gesamtriementriebes unverändert, jedoch kann über den einen Leistungsabnehmer 2a mehr Leistung umgesetzt werden. Zur Illustration des erfindungsgemäßen Ansatzes ist vorliegend nur ein Beispiel mit drei Nebenaggregaten beschrieben, jedoch kann der Nebenaggregatetrieb offensichtlich mehr als drei Nebenaggregate aufweisen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Nebenaggregatetrieb
- 2, 2a, 2b: Nebenaggregat
- 3: erster Riemen
- 4: zweiter Riemen
- 5: treibende Welle
- 6: treibendes Riemenrad bzw. Riemenscheibe
- 7: erste treibende Riemenspur
- 8: zweite treibende Riemenspur
- 9: Umlenkrolle
- 10: Spannrolle, Riemenspanner
- 11: getriebenes Riemenrad mit zwei Riemenspuren
- 12: getriebenes Riemenrad mit einer Riemenspur
- 13: erste getriebene Riemenspur
- 14: zweite getriebene Riemenspur
- 15: erste Riemenebene
- 16: zweite Riemenebene

## Patentansprüche

1. Nebenaggregatetrieb (1) für einen Antriebsmotor, umfassend
a) mehrere Nebenaggregate (2, 2a, 2b);
b) einen ersten Riemen (3), der in einer ersten Riemenebene (15) angeordnet ist und in Antriebsverbindung mit den mehreren Nebenaggregaten (2, 2a, 2b) steht;
c) einen zweiten Riemen (4), der in einer zweiten Riemenebene (16) angeordnet ist, die parallel versetzt zur ersten Riemenebene (15) ist, und in Antriebsverbindung mit lediglich einem Teil (2a) der mehreren Nebenaggregate (2, 2a, 2b) steht, vorzugsweise zur Erhöhung des an den Teil (2a) der mehreren Nebenaggregate (2, 2a, 2b) übertragenen Drehmoments; und
d) eine treibende Welle (5), die über zwei zueinander drehfest angeordnete treibende Riemenspuren (7, 8) in Antriebsverbindung mit dem ersten und dem zweiten Riemen (3, 4) steht.

2. Nebenaggregatetrieb (1) nach Anspruch 1, wobei lediglich eines (2a) der mehreren Nebenaggregate (2, 2a, 2b) in Antriebsverbindung mit dem zweiten Riemen (4) steht.

3. Nebenaggregatetrieb (1) nach Anspruch 2, wobei der zweite Riemen (4) lediglich ein treibendes Riemenrad (6) und ein getriebenes Riemenrad (11) umschlingt.

4. Nebenaggregatetrieb (1) nach einem der vorhergehenden Ansprüche, wobei
a) der zweite Riemen (4) als selbstspannender Riemen ausgeführt ist; und/oder
b) der zweite Riemen (4) keine Spannrolle (9) umschlingt, und/oder
c) beim zweiten Riemen (4) kein Riemenspanner (9), insbesondere kein Riemenspanner zum Spannen des zweiten Riemens (4), vorgesehen ist.

5. Nebenaggregatetrieb (1) nach einem der vorhergehenden Ansprüche, ferner aufweisend eine mit der treibenden Welle (5) drehverbindbare treibende Riemenscheibe (6), die als Doppelriemenscheibe ausgeführt ist, aufweisend eine erste treibende Riemenspur (7), auf der der erste Riemen (3) angreift, und eine zweite treibende Riemenspur (8), auf der ein zweiter Riemen (4) angreift.

6. Nebenaggregatetrieb (1) nach Anspruch 1 bis 4, ferner aufweisend eine mit der treibenden Welle (5) drehverbindbare
a) treibende erste Riemenscheibe, die in der ersten Riemenebene angeordnet ist, aufweisend eine erste treibende Riemenspur (7), auf der der erste Riemen (3) angreift und
b) treibende zweite Riemenscheibe, die in der zweiten Riemenebene und koaxial und drehfest zur treibenden ersten Riemenscheibe angeordnet ist, aufweisend eine zweite treibende Riemenspur (8), auf der der zweite Riemen (4) angreift.

7. Nebenaggregatetrieb nach einem der vorherigen Ansprüche, wobei ein Durchmesser der zwei zueinander drehfest angeordneten treibenden Riemenspuren (7, 8) gleich ist.

8. Nebenaggregatetrieb (1) nach einem der vorhergehenden Ansprüche, wobei der Teil (2a) der mehreren Nebenaggregate (2, 2a, 2b), der in Antriebsverbindung mit dem zweiten Riemen (4) steht, jeweils über zwei zueinander drehfest angeordnete getriebene Riemenspuren (13, 14) in Antriebsverbindung mit dem ersten und dem zweiten Riemen (3, 4) steht.

9. Nebenaggregatetrieb (1) nach Anspruch 5, wobei die zwei zueinander drehfest angeordneten getriebenen Riemenspuren (13, 14) durch eine getriebene Doppelriemenscheibe (11) oder durch zwei koaxial angeordnete getriebene Riemenscheiben bereitgestellt sind.

10. Nebenaggregatetrieb (1) nach Anspruch 8 oder 9, wobei ein Durchmesser der zwei zueinander drehfest angeordneten getriebenen Riemenspuren (13, 14) gleich ist.

11. Nebenaggregatetrieb (1) nach einem der vorhergehenden Ansprüche, wobei ein Nebenaggregat (2a), das in Antriebsverbindung sowohl mit dem ersten als auch mit dem zweiten Riemen (3, 4) steht, von dem ersten Riemen (3) und dem zweiten Riemen (4) mit der gleichen Drehzahl angetrieben wird.

12. Nebenaggregatetrieb (1) nach einem der vorhergehenden Ansprüche, wobei der zweite Riemen (4) als Keilrippenriemen ausgeführt ist.

13. Nebenaggregatetrieb (1) gemäß einem der vorhergehenden Ansprüche, wobei der Nebenaggregatetrieb (1) als Nebenaggregatetrieb (1) für eine Brennkraftmaschine für ein Kraftfahrzeug ausgeführt ist.

14. Kraftfahrzeug, vorzugsweise Nutzfahrzeug, umfassend einen Nebenaggregatetrieb (1) gemäß einem der vorhergehenden Ansprüche.

## Claims

1. Auxiliary unit drive (1) for a drive engine, comprising
a) multiple auxiliary units (2, 2a, 2b);
b) a first belt (3), which is arranged in a first belt plane (15) and is in driving connection with the plurality of auxiliary units (2, 2a, 2b)
c) a second belt (4) arranged in a second belt plane (16), the second belt plane being offset parallel to said first belt plane (15) and being in driving connection with only a part (2a) of said plurality of auxiliary units (2, 2a, 2b), preferably for increasing the torque transmitted to said part (2a) of said plurality of auxiliary units (2, 2a, 2b); and
d) a driving shaft (5) which is in driving connection with the first and the second belt (3, 4) via two driving belt tracks (7, 8) which are arranged in a rotationally fixed manner relative to one another.

2. The auxiliary unit drive (1) of claim 1, wherein only one (2a) of the plurality of auxiliary units (2, 2a, 2b) is in driving connection with the second belt (4).

3. The auxiliary unit drive (1) of claim 2, wherein the second belt (4) loops around only a driving belt wheel (6) and a driven belt wheel (11).

4. The auxiliary unit drive (1) according to one of the preceding claims, wherein
a) the second belt (4) is configured as a self-tensioning belt; and/or
b) the second belt (4) does not partially wrap around a tensioning pulley (9), and/or
c) at the second belt (4), no belt tensioner (9), preferably no belt tensioner (9) for tensioning the second belt (4), is provided.

5. The auxiliary unit drive (1) according to one of the preceding claims, further comprising a driving pulley (6) rotatably connectable to the driving shaft (5), which is configured as a double pulley, comprising a first driving belt track (7) on which the first belt (3) engages, and a second driving belt track (8) on which a second belt (4) engages.

6. The auxiliary unit drive (1) according to claim 1 to 4, further comprising
a) a driving first belt pulley, which is arranged in the first belt plane, having a first driving belt track (7), on which the first belt (3) engages, and which is rotatably connectable to the driving shaft (5), and
b) a driving second belt pulley, which is arranged in the second belt plane, the second belt pulley being arranged coaxially and rotationally fixedly to the driving first belt pulley, the second belt pulley is rotatably connectable to the driving shaft (5) and is comprising a second driving belt track (8) on which the second belt (4) engages.

7. The auxiliary unit drive according to any one of the preceding claims, wherein a diameter of the two driving belt tracks (7, 8) which are arranged in a rotationally fixed manner relative to one another is the same.

8. The auxiliary unit drive (1) according to any one of the preceding claims, wherein the part (2a) of the plurality of auxiliary units (2, 2a, 2b) which is in driving connection with the second belt (4) is in driving connection with the first and the second belt (3, 4) in each case via two driven belt tracks (13, 14) arranged in a rotationally fixed manner relative to one another.

9. The auxiliary unit drive (1) according to claim 5, wherein the two driven belt tracks (13, 14) arranged in a rotationally fixed manner relative to one another are provided by a driven double pulley (11) or by two coaxially arranged driven pulleys.

10. The auxiliary unit drive (1) according to claim 8 or 9, wherein a diameter of the two driven belt tracks (13, 14) arranged in a rotationally fixed manner relative to one another is the same.

11. The auxiliary unit drive (1) according to any one of the preceding claims, wherein an auxiliary unit (2a) in driving connection with both the first and second belts (3, 4) is driven by the first belt (3) and the second belt (4) at the same rotational speed.

12. Auxiliary unit drive (1) according to one of the preceding claims, wherein the second belt (4) is configured as a V-ribbed belt.

13. The auxiliary unit drive (1) according to any one of the preceding claims, wherein the auxiliary unit drive (1) is provided as an auxiliary unit drive (1) for an internal combustion engine for a motor vehicle.

14. Motor vehicle, preferably commercial vehicle, comprising an auxiliary unit drive (1) according to any of the preceding claims.

## Revendications

1. Entraînement (1) d'unités auxiliaires pour un moteur d'entraînement, comprenant
a) une pluralité d'unités auxiliaires (2, 2a, 2b) ;
b) une première courroie (3) qui est agencée dans un premier plan de courroie (15) et qui est en liaison d'entraînement avec la pluralité d'unités auxiliaires (2, 2a, 2b) ;
c) une deuxième courroie (4) qui est agencée dans un deuxième plan de courroie (16) décalé parallèlement au premier plan de courroie (15) et qui est en liaison d'entraînement avec seulement une partie (2a) de la pluralité d'unités auxiliaires (2, 2a, 2b), de préférence pour augmenter le couple transmis à la partie (2a) de la pluralité d'unités auxiliaires (2, 2a, 2b) ; et
d) un arbre d'entraînement (5) qui est en liaison d'entraînement avec la première et la deuxième courroies (3, 4) par l'intermédiaire de deux pistes (7, 8) de courroies d'entraînement agencées de manière à ne pas tourner l'une par rapport à l'autre.

2. Entraînement (1) d'unités auxiliaires selon la revendication 1, dans lequel une seule unité (2a) de la pluralité d'unités auxiliaires (2, 2a, 2b) est en liaison d'entraînement avec la deuxième courroie (4).

3. Entraînement (1) d'unités auxiliaires selon la revendication 2, dans lequel la deuxième courroie (4) entoure uniquement une roue de courroie motrice (6) et une roue de courroie entraînée (11).

4. Entraînement (1) d'unités auxiliaires selon l'une des revendications précédentes, dans lequel
a) la deuxième courroie (4) est une courroie auto-tendue ; et/ou
b) la deuxième courroie (4) n'entoure pas un galet tendeur (9), et/ou
c) aucun tendeur de courroie (9) n'est prévu pour la deuxième courroie (4), en particulier aucun tendeur de courroie pour tendre la deuxième courroie (4).

5. Entraînement (1) d'unités auxiliaires selon l'une des revendications précédentes, présentant en outre une poulie d'entraînement (6) apte à être reliée en rotation à l'arbre d'entraînement (5), qui est réalisée sous forme de poulie double, présentant une première piste (7) de courroie d'entraînement sur laquelle s'engage la première courroie (3), et une deuxième piste (8) de courroie d'entraînement sur laquelle s'engage une deuxième courroie (4).

6. Entraînement (1) d'unités auxiliaires selon les revendications 1 à 4, présentant en outre
a) une première poulie motrice apte à être reliée en rotation à l'arbre d'entraînement (5), qui est agencée dans le premier plan de courroie, présentant une première piste (7) de courroie motrice sur laquelle la première courroie (3) est engagée, et
b) une deuxième poulie d'entraînement apte à être reliée en rotation à l'arbre d'entraînement (5), qui est agencée dans le deuxième plan de courroie, coaxialement à la première poulie d'entraînement et sans pouvoir tourner, et qui présente une deuxième piste (8) de courroie motrice sur laquelle est engagée la deuxième courroie (4).

7. Entraînement (1) d'unités auxiliaires selon l'une des revendications précédentes, dans lequel un diamètre des deux pistes (7, 8) de courroie d'entraînement agencées solidairement en rotation l'une par rapport à l'autre est identique.

8. Entraînement (1) d'unités auxiliaires selon l'une des revendications précédentes, dans lequel la partie (2a) de la pluralité d'unités auxiliaires (2, 2a, 2b) qui est en liaison d'entraînement avec la deuxième courroie (4) est respectivement en liaison d'entraînement avec la première et la deuxième courroie (3, 4) par l'intermédiaire de deux pistes (13, 14) de courroie entraînées agencées de manière fixe en rotation l'une par rapport à l'autre.

9. Entraînement (1) d'unités auxiliaires selon la revendication 5, dans lequel les deux pistes (13, 14) de courroie entraînées agencées solidairement en rotation l'une par rapport à l'autre sont fournies par une poulie double entraînée (11) ou par deux poulies entraînées agencées coaxialement.

10. Entraînement (1) d'unités auxiliaires selon la revendication 8 ou 9, dans lequel un diamètre des deux pistes (13, 14) de courroie entraînées agencées solidairement en rotation l'une par rapport à l'autre est identique.

11. Entraînement (1) d'unités auxiliaires selon l'une des revendications précédentes, dans lequel une unité auxiliaire (2a), qui est en liaison d'entraînement avec à la fois la première et la deuxième courroie (3, 4), est entraîné par la première courroie (3) et la deuxième courroie (4) à la même vitesse de rotation.

12. Entraînement (1) d'unités auxiliaires selon l'une des revendications précédentes, dans lequel la deuxième courroie (4) est réalisée sous la forme d'une courroie à nervures trapézoïdales.

13. Entraînement (1) d'unités auxiliaires selon l'une des revendications précédentes, dans lequel l'entraînement (1) d'unités auxiliaires est réalisé sous la forme d'un entraînement (1) d'unités auxiliaires pour un moteur à combustion interne pour un véhicule automobile.

14. Véhicule automobile, de préférence véhicule utilitaire, comprenant un entraînement (1) d'unités auxiliaires selon l'une des revendications précédentes.
